# EUROPEAN PATENT SPECIFICATION

(11) **EP 1 358 986 B1**
(45) Date of publication and mention of the grant of the patent: **21.04.2010**
(21) Application number: 03251712.0
(22) Date of filing: 19.03.2003
(51) Int. Cl.: B29B 17/00, B29C 47/06, B29B 9/10, B29B 9/12, B32B 27/00, A43B 23/08

(54) **Method of manufacturing a laminar shoe stiffener material**
Verfahren zum Herrstellen eines schichtförmigen Schuhaussteifungsmaterials
Procédé de fabrication d'un materiau stratifié pour contrefort de chaussure

(30) Priority: 23.03.2002 GB 0206914
(43) Date of publication of application: 05.11.2003
(73) Proprietor: Milspeed Limited, Cheltenham, Gloucestershire GL52 4DQ (GB)
(72) Inventor: Milhench, Ian James, Nr. Chipping Norton, Oxfordshire OX7 6XW (GB); Speed, David Robert, Redmarley GL19 3LR (GB)
(74) Representative: Bailey, Richard Alan

(56) References cited:
- DE-A- 3 937 009
- GB-A- 2 023 151
- US-A- 4 115 612
- US-A- 4 234 663
- US-A- 4 402 889
- US-A- 4 877 682
- US-A- 5 132 184
- US-A- 5 928 798

## Description

This invention relates to a laminar shoe stiffener material. The material of the invention is particularly suitable for use in the formation of toepuff and counter stiffeners for use in the manufacture of shoes or other footwear.

It is known to use extruded plastics materials, sometimes provided with a non-woven scrim layer and sometimes provided with a hot-melt adhesive layer as stiffening materials in the manufacture of footwear and other goods, in particular leather goods. When used in footwear, the material is used to support the upper materials and to maintain and return the shoes to their original shape. In order to perform these functions the material must have some stiffness and be resilient. It has been found that certain extruded plastics materials can perform these functions even after repeated wear, both whilst wet and whilst dry, something which was difficult to achieve with traditional materials.

The material is typically supplied in sheet form from which suitably shaped components are cut leaving a skeleton of waste material. It is desirable to be able to recycle the waste material.

One known technique for recycling the material is described in WO 00/53416 in which the waste material is granulated and mixed with virgin material, the mixture being used in the formation of shoe stiffener material. However, in the technique of WO 00/53416, the waste material includes a non-woven scrim which, in the recycled material, forms fibrous particles. The presence of the particles could be problematic particularly where the recycled material is to be of low thickness.

Another common problem is that when used in certain applications, special adhesives have to be used which are not compatible with the shoe stiffener material. As a result, an intermediate layer must be provided of a material with which the adhesive is compatible. The provision of such an intermediate layer is inconvenient and may result in a significant cost increase.

Objects of the invention are to provide techniques and material whereby the disadvantages associated with known techniques can be avoided.

According to one aspect of the invention there is provided a method of manufacturing a laminar shoe stiffener material comprising forming pellets of a waste scrap laminar material including a non-woven scrim layer by completely melting the waste, scrap material, extruding a core formed by the extrusion of a mixture of the pellets formed from waste scrap material and pellets of virgin material, and applying a non-woven scrim to a surface of the core.

The laminar material may be formed using a co-extrusion process to form a core including a first layer extruded from virgin material and a second layer extruded using the pellets formed from scrap material. The second layer may be extruded from a mixture of virgin material and the pellets formed from scrap material, or alternatively may use only the pellets formed from scrap material.

The laminar material may include a layer of hot-melt adhesive material which may be manufactured using a quantity of the pellets formed from waste material. The layer of hot-melt adhesive could be applied using a number of techniques. In one preferred arrangement, the hot-melt adhesive layer is provided using a co-extrusion technique.

The scrap material may be pelletised scrap shoe stiffener material.

The invention also relates to a laminar material manufactured in accordance with one or more of the techniques described hereinbefore and to a shoe stiffener manufactured from the material.

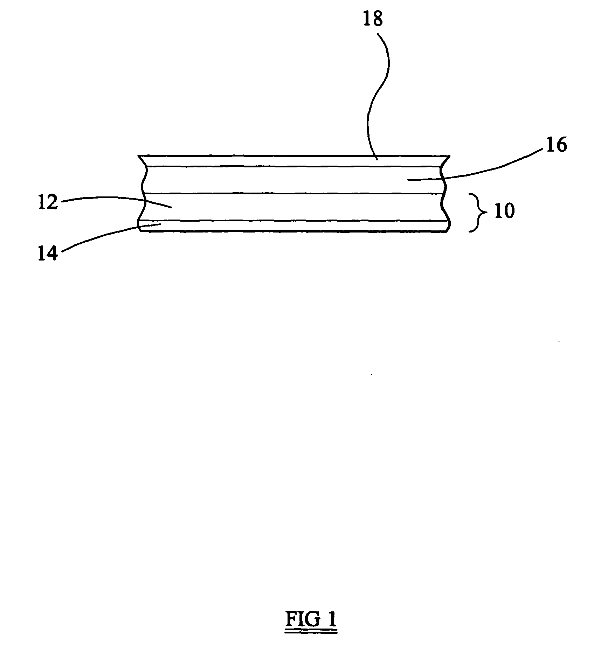

The invention will further be described, by way of example, with reference to the accompanying drawing, Figure 1, which is a diagrammatic view of part of a material manufactured in accordance with the invention.

The laminar material illustrated in Figure 1 comprises a core 10 comprising a first layer 12 of a plastics material and a second layer 14 of another plastics material. The upper surface of the first layer 12 is provided with a layer 16 in the form of a non-woven scrim. A layer 18 of a hot-melt adhesive material is coated onto, and infiltrates into, the layer 16.

The core 10 is formed using a co-extrusion technique in which the layers 12, 14 are extruded simultaneously adjacent one another, the layers 12, 14 being locked to one another as a result of the co-extrusion process with no or very little air becoming trapped between the layers 12, 14. As a result, the layers 12, 14 are firmly secured to one another.

The material illustrated in Figure 1 is manufactured using a pelletised virgin material in the extrusion of the first layer 12, and a pelletised scrap material in the extrusion of the second layer 14. Depending upon the application in which the laminar material is to be used, the second layer may be formed exclusively using pelletised scrap material or alternatively may be manufactured using a mixture of pelletised scrap material and virgin material in appropriate proportions.

The pelletised scrap material is formed by heating scrap laminar material, typically in the form of skeletal waste sheets from which shoe stiffener or other components have been cut. The heating operation should attain a temperature sufficient to fully melt the scrap material. In the arrangement described in WO 00/53416 such a temperature is not attained and, as a result, the non-woven scrim does not melt and so forms particles of fibres in the new product. Although in accordance with the invention a sufficiently high temperature is attained to fully melt the waste material, it is important to ensure that too high a temperature is avoided, and to ensure that the high temperatures are not maintained for too long, so as to ensure that the material is not degraded. By way of example only, it is thought to be sufficient for commonly used materials, for example of EVA with a polyester scrim, to be heated to a maximum temperature of between 260°C and 280°C for a short period of time prior to forming the material into pellets.

After the co-extrusion process has taken place, the layer 16 of non-woven material and the layer 18 of hot-melt adhesive are applied using conventional techniques.

One disadvantage of known single extrusion techniques that the range of materials which can be used is restricted. This is because some materials are not compatible with other materials, and so can not be blended and used together. Where co-extrusion techniques are used, these same materials may be used in conjunction with one another, in separate layers, thus the range of materials which can be used is increased.

Although in the arrangement described hereinbefore the co-extrusion technique is used to form a core 10 of multi-layered form, this need not be the case and, if desired, the co-extrusion technique could be used to apply a layer of a hot-melt adhesive to a single layer core. The application of the hot-melt adhesive in this manner may have the advantage that the range of adhesives which can be used may be increased. By way of example, certain leather materials are only compatible with a narrow range of adhesives, and those adhesives are sometimes not compatible with the materials commonly used in shoe stiffeners. In the past, in order to use these combinations of materials, a thin intermediate layer has been applied between the core and the hot-melt adhesive, the intermediate layer being compatible with both the core and the adhesive. However, the provision of such a layer is time-consuming and inconvenient. By using the co-extrusion technique, the adhesive can be secured directly to the core even though these materials would otherwise be incompatible thereby avoiding the need to provide an intermediate layer. Alternatively, if it is felt that some form of intermediate layer is needed, the layer may be provided by co-extrusion. As a result, the thickness of the layer can be accurately controlled thereby allowing the quantity of material used to be minimised. It will be appreciated that this is particularly advantageous where the material of the intermediate layer is expensive, or where the final product is to be of low thickness.

Although in the arrangements described hereinbefore, co-extrusion techniques are used, the invention is also applicable to single extrusion techniques in which the extruded material includes a quantity of pelletised waste material manufactured as described briefly hereinbefore. The invention is also applicable to the use of pelletised scrap material in an adhesive layer applied to a core. Again, the pelletised scrap material is preferably manufactured in accordance with the method described hereinbefore.

## Claims

1. A method of manufacturing a laminar shoe stiffener material comprising forming pellets of a waste scrap laminar material including a non-woven scrim layer by completely melting the waste, scrap material, extruding a core formed by the extrusion of a mixture of the pellets formed from waste scrap material and pellets of virgin material, and applying a non-woven scrim to a surface of the core.

2. A method according to Claim 1, wherein the core is formed using a co-extrusion process to form a first layer extruded from virgin material and a second layer extruded using the pellets formed from waste scrap material.

3. A method according to Claim 2, wherein the second layer is extruded from a mixture of virgin material and the pellets formed from waste scrap material.

4. A method according to Claim 2, wherein the second layer uses only the pellets formed from waste scrap material.

5. A method according to any one of the preceding claims, wherein the laminar material includes a layer of hot-melt adhesive material.

6. A method according to Claim 5, wherein the hot-melt adhesive material is manufactured using a quantity of the pellets formed from waste material.

7. A method according to Claim 5 or Claim 6, wherein the layer of hot-melt adhesive material is provided using a co-extrusion technique.

8. A method according to Claim 1, wherein the waste scrap material comprises a layer of EVA with a polyester scrim.

9. A method according to any of Claims 1 to 8, wherein the waste material includes a hot-melt adhesive layer.

## Patentansprüche

1. Verfahren zur Herstellung eines schichtförmigen Schuhaussteifungsmaterials das aufweist: Formen von Pellets aus einem schichtförmigen Abfallmaterial, das eine Faservliesscrimschicht enthält, durch vollständiges Schmelzen des Abfallmaterials, Extrudieren eines Kerns, der durch Extrusion eines Gemischs der aus dem Abfallmaterial geformten Pellets und Pellets aus unvermischtem Material geformt wird, und Aufbringen eines Faservliesscrims auf eine Oberfläche des Kerns.

2. Verfahren nach Anspruch 1, wobei der Kern unter Anwendung eines Koextrusionsverfahrens geformt wird, um eine aus unvermischtem Material extrudierte erste Schicht und eine mit den aus Abfallmaterial geformten Pellets extrudierte zweite Schicht zu formen.

3. Verfahren nach Anspruch 2, wobei die zweite Schicht aus einem Gemisch aus unvermischtem Material und den aus Abfallmaterial geformten Pellets extrudiert wird.

4. Verfahren nach Anspruch 2, wobei für die zweite Schicht nur die aus Abfallmaterial geformten Pellets verwendet werden.

5. Verfahren nach einem der vorstehenden Ansprüche, wobei das schichtförmige Material eine Schmelzklebstoffmaterialschicht enthält.

6. Verfahren nach Anspruch 5, wobei das Schmelzklebstoffmaterial unter Verwendung einer Menge der aus Abfallmaterial geformten Pellets hergestellt wird.

7. Verfahren nach Anspruch 5 oder Anspruch 6, wobei die Schmelzklebstoffmaterialschicht unter Anwendung eines Koextrusionsverfahrens bereitgestellt wird.

8. Verfahren nach Anspruch 1, wobei das Abfallmaterial ein Ethylenvinyl-Acetat-Copolymer (EVA) mit einem Polyester-Scrim aufweist.

9. Verfahren nach einem der Ansprüche 1 bis 8, wobei das Abfallmaterial eine Schmelzklebstoffschicht enthält.

## Revendications

1. Procédé de fabrication d'un matériau de renfort stratifié pour chaussure comprenant la mise en forme de pastilles d'un matériau stratifié de récupération de type chutes incluant une couche de canevas non-tissé en faisant fondre entièrement le matériau de récupération de type chutes, l'extrusion d'une âme formée par l'extrusion d'un mélange des pastilles mises en forme à partir du matériau de récupération de type chutes et de pastilles d'un matériau vierge, et l'application d'un canevas non tissé à une surface de l'âme.

2. Procédé selon la revendication 1, dans lequel l'âme est formée en utilisant un procédé de co-extrusion pour former une première couche extrudée à partir du matériau vierge et une seconde couche extrudée en utilisant les pastilles formées à partir du matériau de récupération du type chutes.

3. Procédé selon la revendication 2, dans lequel la seconde couche est extrudée à partir d'un mélange de matériau vierge et des pastilles formées à partir du matériau de récupération du type chutes.

4. Procédé selon la revendication 2, dans lequel la seconde couche utilise uniquement les pastilles formées à partir du matériau de récupération du type chutes.

5. Procédé selon l'une quelconque des revendications précédentes, dans lequel le matériau stratifié inclut une couche de matériau adhésif thermofusible.

6. Procédé selon la revendication 5, dans lequel le matériau adhésif thermofusible est fabriqué en utilisant une quantité des pastilles formées à partir du matériau de récupération.

7. Procédé selon la revendication 5 ou la revendication 6, dans lequel la couche de matériau adhésif thermofusible est fournie en utilisant une technique de co-extrusion.

8. Procédé selon la revendication 1, dans lequel le matériau de récupération du type chutes comprend une couche d'EVA avec un canevas en polyester.

9. Procédé selon l'une quelconque des revendications 1 à 8, dans lequel le matériau de récupération inclut une couche adhésive thermofusible.
